Europäisches Patentamt

European Patent Office

Office européen des brevets

(11) Veröffentlichungsnummer: **0 254 039**
**A2**

## (12) EUROPÄISCHE PATENTANMELDUNG

(21) Anmeldenummer: 87108842.3

(22) Anmeldetag: 20.06.87

(51) Int. Cl.⁴: **C08J 9/14** , C08L 25/04

(30) Priorität: 20.06.86 DE 3620683

(43) Veröffentlichungstag der Anmeldung:
27.01.88 Patentblatt 88/04

(84) Benannte Vertragsstaaten:
**AT BE DE ES FR GB IT NL**

(71) Anmelder: **BASF Aktiengesellschaft**
**Carl-Bosch-Strasse 38**
**D-6700 Ludwigshafen(DE)**

(72) Erfinder: **Voss, Harro, Dr.**
**Carl-Bosch-Strasse 60**
**D-6700 Ludwigshafen(DE)**
Erfinder: **Hahn, Klaus, Dr.**
**Im Buegen 9**
**D-6719 Kirchheim(DE)**
Erfinder: **Walter, Manfraed, Dr.**
**Hans-Purrmann-Allee 18**
**D-6720 Speyer(DE)**
Erfinder: **DeGrave, Isidoor, Dr.**
**Mandelring 3**
**D-6706 Wachenheim(DE)**

(54) **Treibmittelhaltige Styrolpolymerisate.**

(57) Teilchenförmige, treibmittelhaltige Styrolpolymerisate, die neben Kohlenwasserstoffen mit 4 bis 6 C-Atomen oder Halogenkohlenwasserstoffen in einer Menge von 3 bis 10 Gew.-%, zusätzlich aliphatische Kohlenwasserstoffe mit 7 bis 9 Kohlenstoffatomen in Mengen von 0,01 bis 0,5 Gew.-%, jeweils bezogen auf das Styrolpolymerisat, enthalten. Die teilchenförmigen Styrolpolymerisate lassen sich zu Schaumstoffblöcken und -formteilen mit einwandfrei glatter Oberfläche verarbeiten.

EP 0 254 039 A2

## Treibmittelhaltige Styrolpolymerisate

Die Erfindung betrifft teilchenförmige treibmittelhaltige Styrolpolymerisate (EPS), die dadurch charakterisiert sind, daß die daraus hergestellten Formkörper eine verbesserte Oberfläche aufweisen. Die Herstellung von Formkörpern aus schaumförmigen Styrolpolymerisaten ist bekannt. In der Technik hat sich eine Arbeitsweise bewährt, bei der die verschäumbaren treibmittelhaltigen Polymerisatteilchen so lange auf Temperatur oberhalb ihres Erweichungspunktes erhitzt werden, bis sie zu einem losen Haufwerk von gewünschtem Schüttgewicht aufgeschäumt sind. Dieser Vorgang wird als "Vorschäumen" bezeichnet. Die vorgeschäumten Teilchen werden anschließend in geschlossenen Formen zu Schaumstoffblöcken oder -formteilen verschweißt.

Es hat sich nun gezeigt, daß in manchen Fällen - insbesondere wenn man durch Absenkung der Viskositätszahl gemäß DIN 53 726 ein EPS mit hoher Expandierbarkeit herstellt - die Oberflächenbeschaffenheit der Schaumstoffblöcke und -formteile zu wünschen übrig läßt. Die Oberflächen sind in diesen Fällen nicht mehr eben und glatt, sondern die einzelnen Perlen bilden deutliche Erhöhungen. Die Oberflächen wirken dadurch sehr unruhig, es liegt eine "Orangenhaut" vor. Bei schwierigen Formteilen, z.B. mit dünnen Stegen, kommt es dabei zu fehlerhaften und unbrauchbaren Teilen.

Es war daher die Aufgabe gestellt, die Produkte so zu verbessern, daß wieder glatte und einwandfreie Oberflächen ausgebildet werden.

Es wurde gefunden, daß diese Aufgabe gelöst wird durch teilchenförmige expandierbare Styrolpolymerisate enthaltend als Treibmittel a) 3 bis 10 Gew.-%, bezogen auf das Styrolpolymerisat,Kohlenwasserstoffe mit 4 bis 6 Kohlenstoffatomen oder Halogenkohlenwasserstoffe, und b) 0,01 bis 0,5 Gew.-%, bezogen auf das Styrolpolymerisat, aliphatische Kohlenwasserstoffe mit 7 bis 9 Kohlenstoffatomen.

Aus der GB-PS 1 155 905 und der US-PS 3 342 760 sind expandierbare Styrolpolymerisate und daraus hergestellte Schaumstoffe bekannt, die Pentan als alleiniges Treibmittel enthalten. Demgegenüber zeigen Schaumstoff-Formteile, die aus expandierbaren Styrolpolymerisaten mit der erfindungsgemäßen Treibmittelkombination hergestellt worden sind, eine wesentlich verbesserte Oberflächenbeschaffenheit auf.

Aus der DE-OS 21 33 531 ist bekannt, daß Schaumstoffe aus expandierbaren Styrolpolymerisaten eine außerordentlich geringe Nachschwindung aufweisen, wenn man ein Treibmittelgemisch aus 0,05 bis 3 Gew.-% Propan und 0,1 bis 7 Gew.-% eines aliphatischen oder cycloaliphatischen Kohlenwasserstoffs mit 7 bis 15 Kohlenstoffatomen verwendet. Bedingt durch die hohe Flüchtigkeit des bei -42°C siedenden Propans besitzen derartige expandierbaren Styrolpolymerisate jedoch nur eine kurze Lagerfähigkeit.

Styrolpolymerisate im Sinn der Erfindung sind Polystyrol und Mischpolymerisate des Styrols mit anderen alpha-beta-olefinisch ungesättigten Verbindungen, die mindestens 50 Gew.-Teile Styrol einpolymerisiert enthalten. Als Comonomere kommen z.B. in Frage: alpha-Methylstyrol, kernhalogenierte Styrole, kernalkylierte Styrole, Olefine mit 2 - 4 C-Atomen, wie Ethylen, Propylen, Butylen; Acrylnitril, Ester der Acryl-oder Methacrylsäure von Alkoholen mit 1 bis 8 C-Atomen, N-Vinylverbindungen, wie Vinylcarbazol, Maleinsäureanhydrid oder auch geringe Mengen an Verbindungen, die zwei polymerisierbare Doppelbindungen enthalten, wie Butadien, Divinylbenzol oder Butandioldiacrylat. Die Styrolpolymerisate können auch im Gemisch mit bis zu 50 Gew.-% Olefin(co)polymeren, bezogen auf das Gemisch, eingesetzt werden, z.B. (Co)polymeren des Ethylens oder Propylens.

Die Styrolpolymerisate enthalten in homogener Verteilung mehrere Treibmittel. Die Hauptkomponente des Treibmittels besteht aus unter Normalbedingungen gasförmigen oder flüssigen Kohlenwasserstoffe mit 4 bis 6 Kohlenstoffatomen oder Halogenwasserstoffe, die das Styrolpolymerisat nicht lösen und deren Siedepunkt unter dem Erweichungspunkt des Polymerisats liegt. Geeignete derartige Treibmittel sind z.B. Butan, Pentan, Cyclopentan, Hexan, Cyclohexan, Dichlordifluormethan und Trifluorchlormethan. Diese Treibmittel werden in Mengen zwischen 3 und 10 Gew.-% bezogen auf das Styrolpolymerisat, eingesetzt.

Die erfindungsgemäße weitere Komponente b des Treibmittels besteht aus aliphatischen Kohlenwasserstoffen mit 7 bis 9 Kohlenstoffatomen, vorzugsweise n-Octan, in Mengen von 0,01 bis 0,5 Gew.-%, vorzugsweise 0,025 und insbesondere 0,05 bis 0,2 Gew.-%, bezogen auf das Styrolpolymerisat.

Die Styrolpolymerisate können auch Zusätze an anderen Stoffen enthalten, die den expandierbaren Produkten bestimmte Eigenschaften verleihen. Genannt seien beispielsweise Flammschutzmittel auf Basis von organischen Brom-oder Chlorverbindungen, wie Trisdibrompropylphosphat, Hexabromcyclodedecan, Chlorparaffin sowie Synergisten für Flammschutzmittel, wie Dicumyl und hochzersetzliche organische Peroxide; ferner Antistatika, Stabilisatoren, Farbstoffe, Schmiermittel, Füllstoffe und beim Verschäumen antiverklebend wirkende Stoffe, wie Zinkstearat, Melaminformaldehydkondensate oder Kieselsäure, sowie Mittel zur Verkürzung der Entformzeit beim Ausschäumen, wie z.B. Glycerinester oder Hydroxycarbonsäureester. Die Zusatzstoffe können je nach der beabsichtigten Wirkung in den Teilchen homogen verteilt oder als Oberflächenbeschichtung vorliegen.

Die vorliegende Erfindung ist von besonderer Bedeutung bei Styrolpolymerisaten, die nach DE-A-32 34 600 hergestellt werden durch Polymerisation der Monomeren in wäßriger Suspension, wobei während der Polymerisation bei einem Styrol-Umsatz zwischen 20 und 90 % 0,01 bis 1 Gew.-%, vorzugsweise 0,05 bis 0,5 Gew.-% einer bromfreien organischen Verbindung mit einer Kettenübertragungskonstanten K zwischen 0,1 und 50 zugegeben werden, wodurch die Viskositätszahl nach DIN 53 726 abgesenkt wird. Die Erniedrigung der Viskositätszahl kann auch durch geeignete andere Maßnahmen erfolgen, wie z.B. durch eine Erhöhung der Polymerisationstemperatur oder auch durch eine Erhöhung der Initiatorkonzentration.

Die Suspensionspolymerisation von Styrol ist an sich bekannt. Sie ist ausführlich beschrieben im Kunststoff-Handbuch, Band V, "Polystyrol", Carl Hanser-Verlag, Seiten 679 bis 688. Dabei wird im allgemeinen Styrol, gegebenenfalls zusammen mit den obengenannten Comonomeren, in Wasser suspendiert, wobei übliche organische oder anorganische Suspensionsstabilisatoren, vorzugsweise in Mengen zwischen 0,05 und 2 Gew.-%, bezogen auf die Suspension, zugesetzt werden. Die Polymerisation wird im allgemeinen bei einer Temperatur zwischen 80 und 130°C, vorzugsweise zwischen 100 und 120°C ausgeführt. Zum Start der Polymerisation werden organische Polymerisationsinitiatoren, z.B. Peroxide oder Azoverbindungen verwendet, die unter dem Einfluß der Wärme in Radikale zerfallen. Sie werden in Mengen von 0,01 bis 1 Gew.-%, bezogen auf die Monomeren, eingesetzt.

Auch Styrolpolymerisate, die nach anderen Verfahren hergestellt worden sind, sind für das erfindungsgemäße Verfahren geeignet. So können beispielsweise handelsübliche durch Massepolymerisation hergestellte Polymerisate durch Extrusion zu einem Granulat vom Teilchendurchmesser zwischen 0,2 und 8 mm umgewandelt werden und dieses wird dann in Suspension mit dem Treibmittel imprägniert, oder aber das Treibmittel wird bereits im Extruder dem Styrolpolymerisat zugemischt.

Erfindungsgemäß werden vor, während oder nach der Polymerisation die aliphatischen Kohlenwasserstoffe mit 7 bis 9 Kohlenstoffatomen, vorzugsweise n-Octan, zugesetzt. Der aliphatische Kohlenwasserstoff kann zusammen mit dem Treibmittel a zudosiert werden, man kann aber auch beispielsweise den aliphatischen Kohlenwasserstoff im Polymerisationsansatz vorlegen, während das Treibmittel a erst im Laufe der Polymeri sation zugegeben wird. Erfolgt der Zusatz des aliphatischen Kohlenwasserstoffes nach beendeter Polymerisation, so ist es zweckmäßig, ihn durch 2-bis 6-stündiges Rühren bei erhöhter Temperatur in der Polymerisatsuspension im Polymer zu imprägnieren. Der Zusatz kann auch zweckmäßig zusammen mit dem Treibmittel a dem Styrolpolymerisat in der Schmelze, z.B. in einem Extruder, zugemischt werden.

Die erfindungsgemäßen treibmittelhaltigen Styrolpolymerisat-Teilchen haben im allgemeinen einen Durchmesser zwischen 0,2 und 8, vorzugsweise zwischen 0,2 und 4 mm. Sie können nach üblichen Methoden, z.B. mit Wasserdampf, zu Schaumstoffteilchen mit einem Durchmesser zwischen 0,5 und 2 cm und einer Dichte zwischen 5 und 100 g.l$^{-1}$ vorgeschäumt werden. Die vorgeschäumten Teilchen können dann nach üblichen Verfahren zu Schaumstofformteilen mit einem Raumgewicht von 5 bis 100 g.l$^{-1}$ ausgeschäumt werden.

Die in den Beispielen genannten Teile und Prozente beziehen sich auf das Gewicht.


Beispiele

1) Polymerisation

a) In einem druckfesten Rührkessel aus korrosionsfreiem Stahl wurde eine Mischung aus 150 Teilen Wasser, 0,1 Teilen Natriumpyrophosphat, 100 Teilen Styrol, 0,45 Teilen Benzoylperoxid und 0,15 Teilen t-Butylperbenzoat sowie 0,2 Teilen n-Octan unter Rühren auf 90°C erhitzt. Nach 2 Stunden bei 90°C wurden 4 Teile einer 10%igen wäßrigen Lösung von Polyvinylpyrrolidon zugegeben. Nach 3 Stunden bei 90°C wurden 7 Teile n-Pentan zudosiert. Dann wurde eine Stunde bei 95°C, anschließend 2 Stunden bei 105°C und schließlich 2 Stunden bei 125°C gerührt. Das erhaltene Granulat mit einem mittleren Teilchendurchmesser von 1,3 mm wurde isoliert und getrocknet. Die Viskositätszahl des Polymeren nach DIN 53 726 betrug 72,5 [ml/g].

b) In einem druckfesten Rührkessel aus korrosionsfreiem Stahl wurde eine Mischung aus 150 Teilen Wasser, 0,1 Teilen Natriumpyrophosphat, 100 Teilen Styrol, 0,45 Teilen Benzoylperoxid, 0,15 Teilen tert.-Butylperbenzoat und 0,15 Teilen n-Octan unter Rühren auf 90°C erhitzt. Nach 2 Stunden bei 90°C wurden 4 Teile einer 10%igen wäßrigen Lösung von Polyvinylpyrrolidon zugegeben. Nach 3 Stunden bei 90°C wurden 7 Teile n-Pentan, die 0,1 Teile tert.-Dodecylmercaptan enthielten, zudosiert. Dann wurde eine weitere Stunde bei 90°C, anschließend 2 Stunden bei 100°C und anschließend 2 Stunden bei 120°C gerührt.

Das erhaltene Granulat mit einem mittleren Perldurchmesser von 1,4 mm wurde isoliert und getrocknet. Die Viskositätszahl des Polymeren nach DIN 53 726 betrug 71,3 [ml/g].

c) Vergleichsbeispiel 1

In einem druckfesten Rührkessel aus korrosionsfreiem Stahl wurde eine Mischung aus 150 Teilen Wasser, 0,1 Teilen Natriumpyrophosphat, 100 Teilen Styrol, 0,45 Teilen Benzoylperoxid und 0,15 Teilen t-Butylperbenzoat auf 90°C erhitzt.

Nach 2 Stunden bei 90°C wurden 4 Teile einer 10%igen wäßrigen Lösung von Polyvinylpyrrolidon zudosiert. Nach 3 Stunden bei 90°C wurden 7 Teile n-Pentan zugegeben.

Dann wurde eine Stunde bei 95°C, anschließend 2 Stunden bei 105°C und schließlich 2 Stunden bei 125°C gerührt. Das erhaltene Granulat mit eine mittleren Teilchendurchmesser von 1,4 mm wurde isoliert und getrocknet. Die Viskositätszahl des Polymeren nach DIN 53 726 betrug 72,1 [ml/g].

d) Vergleichsbeispiel 2

Es wurde verfahren wie bei Beispiel 1b), nur daß auf den Zusatz von n-Octan verzichtet wurde.

Das erhaltene Granulat hatte einen mittleren Perldurchmesser von 1,35 mm. Die Viskositätszahl des Polymeren nach DIN 53 726 betrug 72,1 [ml/g].

## 2. Aussiebung und Beschichtung

Die erhaltenen Perlpolymerisate wurden in verschiedene Siebfraktionen aufgeteilt. Geprüft wurden jeweils die Fraktion 1,2 bis 1,8 mm, die gewöhnlich zur Herstellung von Blöcken benutzt wird und die Fraktion 0,4 bis 0,7 mm, die in Praxis zur Herstellung von Formteilen verwendet wird. Beschichtet wurde die Blockfraktion mit 0,2 Teilen einer Mischung aus Glycerinmonostearat und Zn-Stearat im Verhältnis 6:1.

Die Formteilfraktion wurde mit 0,5 Teilen einer Mischung der gleichen Substanzen im Verhältnis 5:1 beschichtet.

## 3. Verarbeitung

a) Blockfraktion

Die beschichteten Perlen des Siebschnittes 1,2 bis 1,8 mm wurden in einem kontinuierlichen Rührvorschäumer, Typ Rauscher C 69, mittels strömendem Wasserdampf auf ein Schüttgewicht von 15 g/l ± = ,1 g/l vorgeschäumt. Dabei wurde der erreichte Durchsatz in kg/h bestimmt.

Anschließend wurde das vorgeschäumte Material 24 Stunden zwischengelagert und dann in einer 500 l-Blockform, Typ Rauscher, durch Bedampfung mit einem Druck von 1,7 bar während 10 Sekunden zu einem Block verschweißt. Nach einer 24-stündigen Zwischenlagerung des ausgeschäumten Blockes wurde dessen Oberfläche nach einer 5 Stufen umfassenden Skala beurteilt. Stufe 5 bedeutet eine sehr unebene Oberfläche. Die außen liegenden Kuppen der einzelnen Perlen liegen mehr als 1,5 mm höher als die Grenzlinien, an denen die einzelnen Perlen einander stoßen. Stufe 1 bedeutet eine glatte, völlig ebene Blockoberfläche.

Die Prüfergebnisse der Beispiele 1a bis 1d sind in Tabelle 1 zusammengestellt.

Tabelle 1

| Produkt | Durchsatz beim Vorschäumen | Oberfläche |
|---------|---------------------------|------------|
| Gemäß 1a | 190 | 1 - 2 |
| Gemäß 1b | 220 | 1 - 2 |
| Gemäß 1c | 170 | 4 - 5 |
| Gemäß 1d | 200 | 4 - 5 |

4

b) Formteilfraktion

Die beschichteten Perlen des Siebschnittes 0,4 bis 0,7 mm wurden in einem kontinuierlichen Rührvorschäumer, Typ Rauscher C 69, mittels strömendem Wasserdampf auf eine Schüttdichte von 20 g/l ± 0,2 g/l vorgeschäumt. Dabei wurde der erreichte Durchsatz in kg/h bestimmt.

Anschließend wurde das vorgeschäumte Material zum Teil 24 Stunden und zum Teil 96 Stunden zwischengelagert. Aus den so zwischengelagerten Materialproben wurde auf einem Vakuumautomaten Fabrikat Kurtz ein relativ kompliziertes Formteil gefertigt. Dessen Oberfläche wurde nach 24-stündiger Lagerung beurteilt. Die Beurteilung erfolgte nach einer 5-stufigen Skala. Stufe 5 bedeutet eine sehr unruhige, unebene Oberfläche. Die außen liegenden Kuppen der einzelnen Perlen sind mehr als 0,3 mm über die Grenzlinien, an denen die einzelnen Perlen aneinander stoßen, erhoben. Die Prüfergebnisse der Beispiele 1a bis 1d sind in Tabelle 2 zusammengestellt.

### Tabelle 2

| Produkt | Durchsatz beim Vorschäumen | Formteiloberfläche nach Zwischenlagerung | |
| --- | --- | --- | --- |
| | | von 24 h | von 96 h |
| Gemäß 1a | 340 | 1 – 2 | 2 |
| Gemäß 1b | 390 | 1 – 2 | 2 |
| Gemäß 1c | 260 | 2 – 3 | X |
| Gemäß 1d | 355 | 3 | X |

X Es konnten keine fehlerfreien Formteile mehr gefertigt werden.

## Ansprüche

1. Teilchenförmige, expandierbare Styrolpolymerisate, enthaltend als Treibmittel
a) 3 bis 10 Gew.-%, bezogen auf das Styrolpolymerisat, Kohlenwasserstoffe mit 4 bis 6 Kohlenstoffatomen oder Halogenkohlenwasserstoffe, und
b) 0,01 bis 0,5 Gew.-%, bezogen auf das Styrolpolymerisat, aliphatische Kohlenwasserstoffe mit 7 bis 9 Kohlenstoffatomen.

2. Teilchenförmige, expandierbare Styrolpolymerisate nach Anspruch 1, enthaltend als Treibmittelkomponente b n-Octan.

3. Verfahren zur Herstellung der teilchenförmigen expandierbaren Styrolpolymerisate gemäß Anspruch 1, dadurch gekennzeichnet, daß man die Treibmittelkomponente b vor, während oder nach der Polymerisation zusetzt.

4. Verwendung der teilchenförmigen, expandierbaren Styrolpolymerisate gemäß Anspruch 1 zur Herstellung von Schaumstoff-Formkörpern mit einem Raumgewicht von 5 bis 100 g l$^{-1}$.